(19) Europäisches Patentamt
European Patent Office
Office européen des brevets

(11) **EP 2 465 838 A1**

(12) **EUROPEAN PATENT APPLICATION**
published in accordance with Art. 153(4) EPC

(43) Date of publication:
**20.06.2012 Bulletin 2012/25**

(51) Int Cl.:
***C04B 35/46*** (2006.01)  ***B01D 39/20*** (2006.01)

(21) Application number: **10808268.6**

(22) Date of filing: **10.08.2010**

(86) International application number:
**PCT/JP2010/063798**

(87) International publication number:
**WO 2011/019087 (17.02.2011 Gazette 2011/07)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.08.2009 JP 2009187145**

(71) Applicant: **Sumitomo Chemical Company, Limited Tokyo 104-8260 (JP)**

(72) Inventors:
• **IWASAKI, Kentaro**
  **Niihama-shi**
  **Ehime 792-0025 (JP)**
• **TOHMA, Tetsuro**
  **Niihama-shi**
  **Ehime 792-0002 (JP)**
• **UOE, Kousuke**
  **Niihama-shi**
  **Ehime 792-0025 (JP)**

(74) Representative: **Vossius & Partner**
  **Siebertstrasse 4**
  **81675 München (DE)**

(54) **METHOD FOR PRODUCING ALUMINUM TITANATE CERAMIC, AND ALUMINUM TITANATE CERAMIC**

(57) The present invention is a process for producing an aluminum titanate ceramics, comprising firing a starting material mixture containing a titanium source powder and an aluminum source powder, wherein a content of niobium, expressed on the oxide basis, is not less than 0.2 parts by mass and not more than 2.5 parts by mass in 100 parts by mass of the starting material mixture.

[Fig. 1]

Content of niobium, expressed on the oxide basis (parts by mass)

EP 2 465 838 A1

**Description**

TECHNICAL FIELD

The present invention relates to a process for producing an aluminum titanate-based ceramics, an aluminum titanate-based ceramics, a honeycomb structure body, a diesel particulate filter, and a process for producing a shaped and fired body of aluminum titanate-based ceramics.

BACKGROUND ART

Aluminum titanate-based ceramics is a ceramics containing titanium and aluminum as constitutive elements and having a crystal pattern of aluminum titanate in an x-ray diffraction spectrum. Aluminum titanate-based ceramics have been known as ceramics excellent in heat resistance (e.g., see Journal of the European Ceramic society, 22, 1811-1822 (2002).) and have conventionally been used as firing tools such as crucibles. Recently, the utility value of aluminum titanate-based ceramics in industrial fields is increasing as a material for constituting a ceramics filter for collecting fine carbon particles contained in exhaust gases discharged from an internal combustion engine such as a diesel engine.

A process known for producing such an aluminum titanate-based ceramics comprises firing a starting material mixture containing a powder of a titanium source compound such as titanium oxide and a powder of an aluminum source compound such as alumina (see, WO 2005-105704).

However, except for a costly starting material powder produced by such as a vapor-phase process (chlorine process), generally, a titanium source powder or an aluminum source powder is contaminated with impurities such as niobium (Nb) derived from starting material ores. Therefore, niobium and the like are mixed in the starting material mixture.

DISCLOSURE OF THE INVENTION

The present invention aims to provide a process for producing an aluminum titanate-based ceramics excellent in mechanical strength by using a common titanium source powder or aluminum source powder.

The present invention is a process for producing an aluminum titanate-based ceramics, comprising firing a starting material mixture containing one or more kinds of titanium source powder and one or more kinds of aluminum source powder, wherein a content of niobium, expressed on the oxide basis, is not less than 0.2 parts by mass and not more than 2.5 parts by mass in 100 parts by mass of the starting material mixture.

The starting material mixture preferably contains further one or more kinds of magnesium source powder and/or one or more kinds of silicon source powder.

The firing temperature is preferably 1300 to 1650°C.

The content of the titanium source powder is preferably 30 to 70 parts by mass in the starting material mixture. The content of the aluminum source powder is preferably 30 to 70 parts by mass in the starting material mixture. When the starting material mixture contains a magnesium source powder, the content of the magnesium source powder is preferably 0.1 to 20 parts by mass in 100 parts by mass of the starting material mixture. When the starting material mixture contains a silicon source powder, the content of the silicon source powder is preferably 0.1 to 10 parts by mass in 100 parts by mass of the starting material mixture.

A shaped body of the starting material mixture is preferably fired. The shaped body is preferably a honeycomb structure body.

The present invention also relates to an aluminum titanate-based ceramics, wherein a content of niobium, expressed on the oxide basis, is not less than 0.2 parts by mass and not more than 2.5 parts by mass in 100 parts by mass of the total mass.

The present invention also relates to a honeycomb structure body comprising the aluminum titanate-based ceramics.

The present invention also relates to a diesel particulate filter comprising the aluminum titanate-based ceramics.

The present invention also relates to a process for producing a shaped and fired body of aluminum titanate-based ceramics, comprising pulverizing the aluminum titanate-based ceramics obtained by the process of the aluminum titanate-based ceramics, shaping the obtained pulverized substance, and firing the obtained shaped body. The shaped body is preferably a honeycomb structure body.

BRIEF DESCRIPTION OF THE DRAWINGS

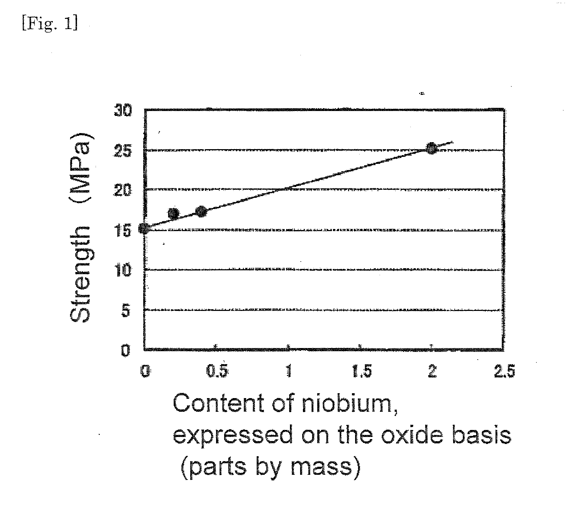

Fig. 1 is a graph showing a relation between the content of niobium (parts by mass), expressed on the oxide basis, in 100 parts by mass of the starting material mixture and a strength of an aluminum titanate-based ceramics obtained by using the starting material mixture.

BEST MODE FOR CARRYING OUT THE INVENTION

(Starting material mixture)

The starting material mixture contains a titanium source powder and an aluminum source powder and has a content of niobium, expressed on the oxide basis (that is, expressed as an oxide of niobium), of not less than 0.2 parts by mass and not more than 2.5 parts by mass in 100 parts by mass of the starting material mixture.

It is preferable that niobium oxide in a content of niobium, expressed on the oxide basis, of not less than 1.0 part by mass is contained in 100 parts by mass of the starting material mixture. It is also preferable that niobium contained in the starting material mixture derives from a starting material powder such as a titanium source powder or an aluminum source powder. Since the starting material mixture can be obtained from a common and economical titanium source powder and aluminum source powder, the production cost of an aluminum titanate-based ceramics can be saved.

The above-mentioned starting material mixture preferably contains further a magnesium source powder. In the present invention, also regarded as a starting material mixture equivalent to that obtained by mixing respective metal source powders is a mixture containing a powder of compounds having two or more metal element components out of a titanium source compound, an aluminum source compound, and a magnesium source compound, like a composite oxide such as magnesia spinel ($MgAl_2O_4$). Further, the starting material mixture may also contain aluminum titanate itself and aluminum magnesium titanate itself. For example, aluminum magnesium titanate as a starting material mixture is regarded as that having a titanium source compound, an aluminum source compound, and a magnesium source compound.

The starting material mixture preferably contains further a silicon source powder.

(Titanium source powder)

A titanium source powder is not particularly limited as long as it is an inorganic powder containing titanium, and is preferably a powder of titanium oxide. Examples of the titanium oxide include titanium(IV) oxide, titanium(III) oxide, and titanium(II) oxide, and preferably used is titanium(IV) oxide.

The titanium(IV) oxide may be amorphous or crystalline. Examples of the crystal type of the titanium(IV) oxide include anatase type, rutile type, brookite type, and preferable are anatase and rutile types.

In the present invention, the titanium source powder is preferably a powder obtained by a common process for producing but not a costly powder produced by a vapor-phase process (chlorine process). Examples of the titanium source powder include a titanium oxide powder obtained by a sulfuric acid process using a titanic iron ore, such as an illuminite ore, as a starting material. The titanium source powder may contain niobium and the content of niobium, expressed on the oxide basis, is preferably 0.1 to 2 parts by mass, and more preferably 0.2 to 2 parts by mass in 100 parts by mass of the titanium source powder.

As the titanium source powder, a powder of compounds to be led to titania (titanium oxide) by firing in the air can also be used. Examples of the compounds particularly include a titanium salt, a titanium alkoxide, titanium hydroxide, titanium nitride, titanium sulfide, metal titanium. Specific examples of the titanium salt include titanium trichloride, titanium tetrachloride, titanium(IV) sulfide, titanium(VI) sulfide, and titanium(IV) sulfate. Specific examples of the titanium alkoxide include titanium(IV) ethoxide, titanium(IV) methoxide, titanium(IV) tert-butoxide, titanium(IV) isobutoxide, titanium(IV) n-propoxide, titanium(IV) tetraisopropoxide, and their chelate compounds. The titanium source powder may contain trace components inevitably contained in its production process.

The particle diameter of the titanium source powder is not particularly limited, and is generally preferable to have a particle diameter corresponding to a cumulative percentage of 50% on a volume basis (D50) of 0.1 to 20 $\mu$m, which is measured by laser diffractometry. The content of the titanium source powder is preferably 30 to 70 parts by mass, more preferably 45 to 60 parts by mass, and even more preferably 50 to 60 parts by mass in 100 parts by mass of the starting material mixture, in order to adjust the content of niobium, expressed on the oxide basis, to not less than 0.1 parts by mass and not more than 2.5 parts by mass in 100 parts by mass of the starting material mixture.

(Aluminum source powder)

An aluminum source powder is not particularly limited as long as it is an inorganic powder containing aluminum, and is preferably alumina. The alumina may be amorphous or crystalline. Examples of the crystal type of the alumina include $\gamma$-type, $\delta$-type, $\theta$-type, and $\alpha$-type, and preferable is $\alpha$-type.

As the aluminum source powder, a powder of compounds to be led to alumina by firing in the air can also be used. Examples of the compound include an aluminum salt, an aluminum alkoxide, aluminum hydroxide, and metal aluminum.

The aluminum salt may be a salt with inorganic acid or a salt with organic acid. Examples of the salt with inorganic acid include aluminum nitrates such as aluminum nitrate and ammonium aluminum nitrate; and aluminum carbonates such as ammonium aluminum carbonate. Examples of the salt with organic acid include aluminum oxalate, aluminum acetate, aluminum stearate, aluminum lactate, and aluminum laurate.

Examples of the aluminum alkoxide include aluminum isopropoxide, aluminum ethoxide, aluminum sec-butoxide, and aluminum tert-butoxide.

The aluminum hydroxide may be amorphous or crystalline. Examples of the crystal type of the aluminum hydroxide include gibbsite type, bayerite type, nordstrandite type, boehmite type, and pseudoboehmite type. Examples of the amorphous aluminum hydroxide include aluminum hydrolysate obtained by hydrolyzing an aqueous solution of a water-soluble aluminum compound such as an aluminum salt or an aluminum alkoxide. The aluminum source powder may contain trace components inevitably contained in its production process.

The particle diameter of the aluminum source powder is not particularly limited, and is generally preferable to have a particle diameter corresponding to a cumulative percentage of 50% on a volume basis (D50) of 1 to 100 $\mu$m, which is measured by laser diffractometry. The content of the aluminum source powder is preferably 30 to 70 parts by mass, more preferably 35 to 60 parts by mass, and even more preferably 40 to 50 parts by mass in 100 parts by mass of the starting material mixture.

(Silicon source powder)

A silicon source powder is not particularly limited as long as it is an inorganic powder containing silicon element, and is preferably a powder of silicon oxide. Examples of the silicon oxide include silicon dioxide and silicon monoxide.

As the silicon source powder, a powder of compounds to be led to silicon oxide (silica) by firing in the air can also be used. Examples of the compound include silicic acid, silicon carbide, silicon nitride, silicon sulfide, silicon tetrachloride, silicon acetate, sodium silicate, sodium orthosilicate, feldspar, and glass frit.

As a specific silicon source powder, glass frit is preferably used from the viewpoint of easiness in industrial availability and stability in component composition. Glass frit means flaky or powdery glass obtained by pulverizing glass. Examples of the glass frit constituents include silicate glass, and common silicate glass containing silicate (silicon dioxide, $SiO_2$) as a main component (not less than 50% by mass in the entire components) is preferably used. Examples of the other components in silicate glass include, similar to common silicate glass, alumina ($Al_2O_3$), sodium oxide ($Na_2O$), potassium oxide ($K_2O$), calcium oxide (CaO), and magnesia (MgO). In order to improve the hot water resistance of glass itself, silicate glass is preferable to contain $ZrO_2$ and the content thereof is preferably not less than 0.1% by weight and not more than 10% by weight.

As the silicon source powder, such as a powder also serving as the aluminum source powder may be used. Examples of such a powder include a feldspar powder. The silicon source powder may contain trace components inevitably contained in its production process.

The particle diameter of the silicon source powder is not particularly limited, and is generally preferable to have a particle diameter corresponding to a cumulative percentage of 50% on a volume basis (D50) of 1 to 10 $\mu$m, which is measured by laser diffractometry. The content of the silicon source powder is preferably 0.1 to 10 parts by mass, more preferably 2 to 8 parts by mass, and most preferably 4 to 6 parts by mass in 100 parts by mass of the starting material mixture.

(Magnesium source powder)

A magnesium source powder is not particularly limited as long as it is an inorganic powder containing magnesium, and is preferably magnesia (magnesium oxide).

As the magnesium source powder, a powder of compounds to be led to magnesia by firing in the air can also be included.

Examples of the compounds to be led to magnesia by firing in the air include a magnesium salt, a magnesium alkoxide, magnesium hydroxide, magnesium nitride, and metal magnesium. Specific examples of the magnesium salt include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate. Specific examples of the magnesium alkoxide include magnesium methoxide and magnesium ethoxide. The magnesium source powder may contain trace components inevitably contained in its production process.

4

As the magnesium source powder, such as a powder serving as the magnesium source and aluminum source may also be used. Examples of such a compound include magnesia spinel ($MgAl_2O_4$).

The particle diameter of the magnesium source powder is not particularly limited, and is generally preferable to have a particle diameter corresponding to a cumulative percentage of 50% on a volume basis (D50) of 0.5 to 20 $\mu$m, which is measured by laser diffractometry. The content of the magnesium source powder is preferably 0.1 to 20 parts by mass, more preferably 1 to 10 parts by mass, and even more preferably 2 to 8 parts by mass in 100 parts by mass of the starting material mixture.

(Mixing of starting material powders)

In the production process of the present invention, generally, the titanium source powder, the aluminum powder, the silicon source powder if necessary, and the magnesium powder if necessary (hereinafter, each of which may also be referred to as "starting material powder") are mixed to obtain a starting material mixture. A mixing process may be either of a process for carrying out mixing in a dry atmosphere (dry mixing process) and a process for carrying out mixing in a wet atmosphere (wet mixing process). The starting material mixture may contain fine -particulate aluminum titanate and the like.

(1) Dry mixing process

In the case of mixing in a dry atmosphere, the respective starting material powders above-mentioned may be stirred in a pulverization container without being dispersed in a liquid medium, and may be stirred in the pulverization container in the co-presence of pulverization media to simultaneously pulverize the starting material powders.

As the pulverization container, generally a container made of a metal material such as stainless steel is used, and the inner surface thereof may be coated with a fluorine resin, a silicon resin, a urethane resin and the like.

The inner volume of the pulverization container is generally 1 to 4 times by volume and preferably 1.2 to 3 times by volume as much as the total volume of the starting material powders and the pulverization media.

Examples of the pulverization media include alumina beads and zirconia beads with a diameter of 1 mm to 100 mm, and preferably 5 mm to 50 mm. The amount of the pulverization media to be used is generally 1 to 1000 times by mass and preferably 5 to 100 times by mass as much as the total amount of the starting material powders (total amount of powders including a composite oxide powder such as fine-particulate aluminum magnesium titanate and the like when it is used. The same shall apply hereinafter).

In the case where the starting material powders are pulverized simultaneously with being mixed, for example, the starting material powders are put together with the pulverization media to the pulverization container, and then the starting material powders are mixed and simultaneously pulverized by vibrating or rotating the pulverization container. In order to vibrate or rotate the pulverization container, a common pulverizer such as a vibration mill, a ball mill, a planetary mill, or a high speed rotating pulverizer such as pin mill may be used, and a vibration mill is preferably usable from the viewpoint of easiness of operation in industrial scale. In the case where the pulverization container is vibrated, the vibration amplitude is generally 2 mm to 20 mm and preferably not higher than 12 mm. The pulverization may be carried out by a continuous process or by a batch process, and from the viewpoint of easiness of operation in industrial scale, it may preferably be carried out by a continuous process.

The time required for the pulverization is generally 1 minute to 6 hours and preferably 1.5 minutes to 2 hours. At the time of pulverizing the starting material powders in a dry condition, one or more kinds of additives such as a pulverization aid and a deflocculant may be added to the starting material powders.

Examples of the pulverization aid include monohydric alcohols such as methanol, ethanol, and propanol; dihydric alcohols such as propylene glycol, polypropylene glycol, and ethylene glycol; amines such as triethanolamine; higher fatty acids such as palmitic acid, stearic acid, and oleic acid; and carbon materials such as carbon black and graphite.

In the case where the additives are used, the total amount of the additives to be used is generally 0.1 parts by mass to 10 parts by mass, preferably 0.5 parts by mass to 5 parts by mass, and more preferably 0.75 parts by mass to 2 parts by mass relative to 100 parts by mass of the total amount of the starting material powders.

(2) Wet mixing process

In the case of mixing in a wet condition, a starting material powder such as the silicon source powder is mixed with other starting material powders in a state where the starting material powder is dispersed in a solvent, and in general, the silicon source powder may be mixed with other starting material powders in a state where the silicon source powder is dispersed in a solvent. At that time, water is generally used as the solvent, and ion-exchanged water is preferably used from the viewpoint of less impurities. The amount of the solvent to be used is generally 20 parts by mass to 1000 parts by mass and preferably 30 parts by mass to 300 parts by mass relative to 100 parts by mass of the total amount of the starting material powders.

A dispersant may be added to the solvent at the time of mixing in the wet condition. Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate. The amount of the dispersant to be used is generally 0.1 parts by mass to 20 parts by mass and preferably 0.2 parts by mass to 10 parts by mass relative to 100 parts by mass of the total amount of the solvent.

Additionally, in the wet mixing process, the starting material powders (titanium source powder, aluminum source powder, and magnesium source powder) other than the silicon source powder may also be mixed after being dissolved in a solvent depending on the kinds of the powders; however, the starting material powders dissolved in a solvent is precipitated again as a solid content by solvent distillation.

In the wet mixing process, a pulverizer such as a medium stirring mill, a ball mill, or a vibration mill may be preferably used for mixing. The titanium source powder, the aluminum source powder, the magnesium source powder, and the silicon source powder such as glass frit are mixed while being pulverized together by mixing with a pulverizer to obtain a starting material mixture with more uniform composition.

Examples of the wet mixing process include a process for carrying out simply stirring treatment in a common liquid solvent. Examples of the liquid solvent for use include monohydric alcohols such as methanol, ethanol, butanol, and propanol; dihydric alcohols such as propylene glycol, polypropylene glycol, and ethylene glycol; and ion-exchanged water; and more preferable is ion-exchanged water.

In the wet mixing process, the starting material powders may also be pulverized simultaneously by stirring the powders in a pulverization container in the co-presence of pulverization media. For example, after the starting material powders and the pulverization media are put in the pulverization container, the pulverization container may be vibrated or rotated to carry out pulverization.

As the pulverization container, generally a container made of a metal material such as stainless steel is used, and the inner surface thereof may be coated with a fluorine resin, a silicon resin, a urethane resin and the like. The inner volume of the pulverization container is generally 1 time by volume to 4 times by volume and preferably 1.2 times by volume to 3 times by volume as much as the total volume of the starting material powders and the pulverization media.

Examples of the pulverization media include alumina beads and zirconia beads with a diameter of 1 mm to 100 mm, and preferably 5 mm to 50 mm. The amount of the pulverization media to be used is generally 1 time by mass to 1000 times by mass and preferably 5 times by mass to 100 times by mass as much as the total amount of the starting material powders.

In order to vibrate or rotate the pulverization container, a common pulverizer such as a vibration mill, a ball mill, a planetary mill, or a high speed rotating pulverizer such as pin mill may be used, and a vibration mill is preferably usable from the viewpoint of easiness of operation in industrial scale. In the case where the pulverization container is vibrated, the vibration amplitude is generally 2 mm to 20 mm and preferably 12 mm or lower. The pulverization may be carried out by a continuous process or by a batch process, and from the viewpoint of easiness of operation in industrial scale, it may preferably be carried out by a continuous process. The time required for the pulverization is generally 1 minute to 6 hours and preferably 1.5 minutes to 2 hours.

At the time of pulverizing the starting material powders in the wet condition, one or more kinds of additives such as a pulverization aid and a deflocculant may be added to the starting material powders, besides the pulverization media.

Examples of the pulverization aid include monohydric alcohols such as methanol, ethanol, and propanol; dihydric alcohols such as propylene glycol, polypropylene glycol, and ethylene glycol; amines such as triethanolamine; higher fatty acids such as palmitic acid, stearic acid, and oleic acid; and carbon materials such as carbon black and graphite, and they may be used alone or in combination of two or more kinds thereof. The total amount of the additives to be used is generally 0.1 parts by mass to 10 parts by mass, preferably 0.5 parts by mass to 5 parts by mass, and more preferably 0.75 parts by mass to 2 parts by mass relative to 100 parts by mass of the total amount of the starting material powders.

After mixing is carried out in the wet atmosphere as described above, the solvent is removed to obtain a starting material mixture for use in the present invention. The solvent removal is generally carried out by distillation of the solvent. At the time of the solvent removal, air drying at room temperature, vacuum drying, or heat drying may be carried out. A drying process may be static drying or fluidization drying. The temperature at the time of heat drying is not particularly limited, and it is generally not lower than 50°C and not higher than 250°C. Examples of the instrument for heat drying include a shelf dryer, a slurry dryer, and a spray dryer.

(Firing step)

In the production process of the present invention, the powdery starting material mixture obtained in the above-mentioned manner may be fired as it is in the powder state and then shaped, or may be shaped and then fired. A shaped body obtained by shaping the fired powdered starting material mixture may further be fired.

The firing temperature is generally not lower than 1300°C, preferably not lower than 1400°C, and generally not higher than 1650°C, and preferably not higher than 1550°C. A heating process to the firing temperature is not particularly limited, and the rate is generally 1°C /hour to 500°C /hour. Further, during the firing, a process of keeping at a constant temperature may be provided.

The firing is generally carried out in the air; however, depending on the kinds of the starting material powders or the ratio of the starting material powders used, the firing may be carried out in an inert gas such as nitrogen gas or argon gas, or in a reducing gas such as carbon monoxide gas or hydrogen gas. Further, the firing may be carried out in an atmosphere where the water vapor partial pressure is reduced.

The firing is generally carried out by using a common firing furnace such as a tubular electric furnace, a box type electric furnace, a tunnel furnace, an infrared furnace, a microwave heating furnace, a shaft furnace, a reverberating furnace, a rotary furnace, and a roller hearth furnace. The firing may be carried out by a batch process or by a continuous process. The firing may also be carried out in a static manner or in a fluidization manner.

The time required for the firing may be sufficient if the starting material powders are transited into an aluminum titanate-based ceramics, and although it differs depending on the amount of the starting material mixture, the model of the firing furnace, the firing temperature, and the firing atmosphere, it is generally 10 minutes to 24 hours.

In the case where a bulky aluminum titanate-based ceramics is obtained as a fired body, the fired body is pulverized to obtain an aluminum titanate-based ceramics powder. The pulverization may be carried out by hand or using a mortar, or by using a common pulverizer such as a ball mill, a vibration mill, a planetary mill, a medium stirring mill, a pin mill, a jet mill, a hammer mill, or a roll mill. The aluminum titanate-based ceramics powder obtained by pulverization may be classified by a common process.

An aimed aluminum titanate-based ceramics can be obtained in the above-mentioned process.

The aluminum titanate-based ceramics (powder or shaped body) obtained in the production process of the present invention has a crystal pattern of aluminum titanate, and may further have crystal patterns of, for example, silica, alumina, and titania in an x-ray diffraction spectrum. In the case where the aluminum titanate-based ceramics is aluminum magnesium titanate $(Al_{2(1-x)}Mg_xTi_{(1+x)}O_5)$, the value of x is not lower than 0.01, preferably not lower than 0.05 and not higher than 0.7, and more preferably not lower than 0.10 and not higher than 0.5.

The starting material mixture may be shaped into a shaped body by a commonly employed shaping process before being fired, and examples of the shaping process include uniaxial shaping and extrusion shaping. Examples of the shaping machine to be used for shaping include a uniaxial press machine, an extrusion shaping machine, a tableting machine, and a granulator.

At the time of extrusion shaping, a pore-forming agent, a binder, a lubricant and a plasticizer, a dispersant, a solvent and the like may be added to the starting material mixture for shaping. Examples of the pore-forming agent include carbon materials such as graphite; resins such as polyethylene, polypropylene, and polymethyl methacrylate; plant materials such as starch, nut shells, walnut shells, and corn; ice and dry ice.

Examples of the binder include celluloses such as methyl cellulose, carboxyl methyl cellulose, and sodium carboxyl methyl cellulose; alcohols such as polyvinyl alcohol; salts such as lignin sulfonic acid salt; waxes such as paraffin wax and microcrystalline wax; and thermoplastic resins such as EVA, polyethylene, polystyrene, liquid crystal polymers, and engineering plastic. Examples of the lubricant and the plasticizer include alcohols such as glycerin; higher fatty acids such as capric acid, lauric acid, palmitic acid, alginic acid, oleic acid, and stearic acid; and stearic acid metal salts such as aluminum stearate. As the solvent, generally, water such as ion-exchanged water may be used, and it is preferable to use ion-exchanged water with adjusted temperature. In addition, there are substances serving as both the pore-forming agent and the binder. Examples of such substances include those which can keep the shape of the shaped body by bonding particles at the time of shaping and can form pores with being burned out itself at the time of subsequent firing, and specifically, polyethylene and the like may be used in some cases.

The shape of the shaped body obtained by shaping the starting material mixture is not particularly limited, and examples thereof include a honeycomb structure body, a spherical structure body, a cubic structure body, and a rectangular block structure body, and particularly preferable is a honeycomb structure body.

The aluminum titanate-based ceramics obtained by the production prcess of the present invention may be used in tools for a firing furnace such as a crucible, a setter, a sagger, and a refractory lining; exhaust gas filters and catalyst carriers to be used in exhaust gas purification for an internal combustion engine such as a diesel engine or a gasoline engine; filtration filters to be used in filtration of beverage such as beer; ceramics filters such as a filter with permselectivity for selectively permeating gas components generated at the time of petroleum refining, e.g., carbon monoxide, carbon dioxide, nitrogen, and oxygen; and electronic parts such as a substrate and a capacitor.

Particularly, a diesel particulate filter, an exhaust gas filter for a diesel engine (hereinafter, referred to also as DPF) generally has a honeycomb shape, a diameter of 100 to 500 mm and a length of 100 to 500 mm, a wall thickness of 0.1 to 0. 5 mm, and a cell density of 100 to 500 cpsi (cell per square inch). In the case where the DPF is applied for a diesel engine for a vehicle, the DPF is required to have both heat resistance and mechanical strength since it is constantly exposed to vibration. Since the aluminum titanate-based ceramics obtained by the process of the present invention has both high heat resistance and high mechanical strength, it can be preferably applied for a DPF.

EXAMPLES

Hereinafter, the present invention will be described in detail with reference to examples; however the present invention should not be limited to these examples. The respective measurements in examples and comparative examples described below were carried out by the following measurement methods.

(Measurement of aluminum titanate conversion ratio)

Aluminum (magnesium) titanate conversion ratio (hereinafter, referred to as "AT conversion ratio") of an aluminum titanate-based ceramics was calculated according to the following formula (2) from integral intensity (IT) of the peak (titania-rutile phase plane) appearing at a point of $2\theta = 27.4°$ and integral intensity ($I_{AT}$) of the peak (corresponding to aluminum titanate phase plane or aluminum magnesium titanate phase plane) appearing at a point of $2\theta = 33.7°$ in a powder x-ray diffraction spectrum:

$$\text{AT conversion ratio } (\%) = 100 \times I_{AT} / (I_{AT} + I_T) \qquad (2)$$

Three-point bending strength of the aluminum titanate-based ceramics obtained in the respective examples and comparative examples was measured and evaluated by the following method. First, respective metal source compounds described in the respective examples and comparative examples were mixed, or pulverized and mixed, and 2 g of the obtained starting material mixture was formed at a pressure of 0.3 t/cm$^2$ by uniaxial press to produce a shaped body with a length of 50 mm, a width of 4 mm, and a thickness of 3 mm. Next, the shaped body was heated in a box type electric furnace at a heating rate of 300°C/h to 1450°C, and fired at 1450°C for 4 hours to obtain an aluminum titanate-based ceramics fired body. The fired body was subjected to the bending strength measurement by a method according to JIS R1601.

(Reference Example)

To a pulverization container (inner volume: 3.3 L) made of alumina were put 24.1 g of a titanium oxide powder (manufactured by Du Pont, "R-900"), 20. 5 g of an α-alumina powder (manufactured by Sumitomo Chemical Co., Ltd., BET specific surface area of 0.6 m$^2$/g), 2.0 g of a magnesia powder (manufactured by Ube Material Co., Ltd., "UC-95 M"), and 3.5 g of glass frit (manufactured by Takara Standard, Model number CK-0832M2, deformation point of 776°C), together with 5 kg of alumina beads (diameter: 15 mm). The value of x in the composition of aluminum magnesium titanate ($Al_{2(1-x)}MgxTi_{(1+x)}O_5$) in the starting material mixture was about 0.24. In addition, the above-mentioned titanium oxide powder (manufactured by Du Pont, "R-900") was a titanium oxide powder obtained by a vapor phase process (chlorine process), and the niobium content was 0%.

The total volume of the mixture of the titanium oxide powder, α-alumina powder, magnesia powder, and glass frit was about 50 cm$^3$. Thereafter, the pulverization container was vibrated by a vibration mill in the conditions of 5.4 mm of vibration amplitude, 1760 times/minutes of vibration frequency, 5.4 kW of motive power, and 10 G of gravitational acceleration for 6 minutes to pulverize the mixture in the pulverization container. After the pulverization, 5 g of the starting material mixture was put to an alumina crucible, and heated at a heating rate of 300°C /hour to 1450°C in the air by a box type electric furnace, and kept at the same temperature for 4 hours to fire the starting material mixture. Thereafter, the fired body was cooled to room temperature to obtain a fired body of an aluminum titanate-based ceramics. The obtained aluminum titanate-based ceramics was pulverized in a mortar to obtain an aluminum titanate-based ceramics powder.

The AT conversion ratio of the obtained powder was determined, and it was 100%. The bending strength of the fired body was 15.1 MPa.

(Example 1)

An aluminum titanate-based ceramics powder was obtained in the same manner as in reference example, except that 1.0 g of a niobium oxide powder (manufactured by Wako Pure Chemical Industries, Ltd., purity 99.9%) (about 1.96 parts by mass as a content in 100 parts by mass of the starting material mixture containing niobium oxide) was added to the starting material mixture of the reference example (24.1 g of the titanium oxide powder, 20. 5 g of the α-alumina powder, 2.0 g of the magnesia powder, and 3.5 g of the glass frit).

The AT conversion ratio of the obtained powder was determined, and it was 100%. The bending strength of the fired body was 25.1 MPa.

(Example 2)

An aluminum titanate-based ceramics powder was obtained in the same manner as in reference example, except that 0.1g of a niobium oxide powder (manufactured by Wako Pure Chemical Industries, Ltd., purity 99.9%) (about 0.2 parts by mass as a content in 100 parts by mass of the starting material mixture containing niobium oxide) was added.
The AT conversion ratio of the obtained powder was determined, and it was 100%. The bending strength of the fired body was 16.9 MPa.

(Example 3)

An aluminum titanate-based ceramics powder was obtained in the same manner as in reference example, except that 0.2 g of a niobium oxide powder (manufactured by Wako Pure Chemical Industries, Ltd., purity 99.9%) (about 0.4 parts by mass as a content in 100 parts by mass of the starting material mixture containing niobium oxide) was added.
The AT conversion ratio of the obtained powder was determined, and it was 100%. The bending strength of the fired body was 17.2 MPa.
In Fig. 1, the relation between the content of niobium (parts by mass), expressed on the oxide basis, in 100 parts by mass of the starting material mixture and the strength of the shaped body of the aluminum titanate-based ceramics powder obtained in each of reference example and Examples 1, 2, and 3 is shown as a graph. As is understood from Fig. 1, in the case where the content of niobium, expressed on the oxide basis, is higher than 0.2 parts by mass, the strength of the shaped body becomes high.
It should be understood that the embodiments and examples disclosed herein are illustrative and are not restrictive in all respects. The scope of the present invention is not shown by the description described above, but is shown by the claims, and it is intended to comprise all modifications in the meaning and in the range of claims-equivalent.

INDUSTRIAL APPLICABILITY

The process of the present invention makes it possible to produce an aluminum titanate-based ceramics excellent in heat resistance by using a common starting material mixture containing a titanium source powder and an aluminum source powder.

**Claims**

1. A process for producing an aluminum titanate-based ceramics, comprising firing a starting material mixture containing a titanium source powder and an aluminum source powder, wherein
a content of niobium, expressed on the oxide basis, is not less than 0.2 parts by mass and not more than 2.5 parts by mass in 100 parts by mass of the starting material mixture.

2. The process according to claim 1, wherein the starting material mixture further contains a magnesium source powder.

3. The process according to claim 1 or 2, wherein the starting material mixture further contains a silicon source powder.

4. The process according to any one of claims 1 to 3, wherein the firing temperature is 1300 to 1650°C.

5. The process according to any one of claims 1 to 4, wherein the content of the titanium source powder is 30 to 70 parts by mass in 100 parts by mass of the starting material mixture.

6. The process according to any one of claims 1 to 5, wherein the content of the aluminum source powder is 30 to 70 parts by mass in 100 parts by mass of the starting material mixture.

7. The process according to claim 2, wherein the content of the magnesium source powder is 0.1 to 20 parts by mass in 100 parts by mass of the starting material mixture.

8. The process according to claim 3, wherein the content of the silicon source powder is 0.1 to 10 parts by mass in 100 parts by mass of the starting material mixture.

9. An aluminum titanate-based ceramics, wherein a content of niobium, expressed on the oxide basis, is not less than 0.2 parts by mass and not more than 2.5 parts by mass in 100 parts by mass of the total mass.

10. A honeycomb structure body comprising the aluminum titanate-based ceramics according to claim 9.

11. A diesel particulate filter comprising the aluminum titanate-based ceramics according to claim 9.

12. The process according to claim 1, comprising firing a shaped body of the starting material mixture.

13. The process according to claim 12, wherein the shaped body is a honeycomb structure body.

14. A process for producing a shaped and fired body of aluminum titanate-based ceramics, comprising pulverizing the aluminum titanate-based ceramics obtained by the process according to claim 1, shaping the obtained pulverized substance, and firing the obtained shaped body.

15. The process according to claim 14, wherein the shaped body is a honeycomb structure body.

[Fig. 1]

Content of niobium,
expressed on the oxide basis
(parts by mass)

<table>
<tr><td colspan="2" align="center">**INTERNATIONAL SEARCH REPORT**</td><td colspan="2">International application No.<br>PCT/JP2010/063798</td></tr>
</table>

| A. CLASSIFICATION OF SUBJECT MATTER |
|---|
| C04B35/46(2006.01)i, B01D39/20(2006.01)i |
| According to International Patent Classification (IPC) or to both national classification and IPC |

| B. FIELDS SEARCHED |
|---|
| Minimum documentation searched (classification system followed by classification symbols) |
| C04B35/46, B01D39/20 |
| Documentation searched other than minimum documentation to the extent that such documents are included in the fields searched |
| Jitsuyo Shinan Koho      1922-1996    Jitsuyo Shinan Toroku Koho   1996-2010<br>Kokai Jitsuyo Shinan Koho  1971-2010    Toroku Jitsuyo Shinan Koho    1994-2010 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 7-61862 A  (Honda Motor Co., Ltd.),<br>07 March 1995 (07.03.1995),<br>claim 1; table 2; paragraphs [0045], [0048]<br>(Family: none) | 1-9,12<br>1-15 |
| X<br>Y | JP 2-248362 A  (Inax Corp.),<br>04 October 1990 (04.10.1990),<br>claim 1; page 2, lower right column, lines 9<br>to 14; page 3, lower right column, line 1 to<br>page 4, upper left column, line 1; pages 3 to 4,<br>tables 1 to 2<br>(Family: none) | 1,3-6,8,9,12<br>1-15 |
| Y | WO 2009/063997 A1  (Hitachi Metals, Ltd.),<br>22 May 2009 (22.05.2009),<br>claim 1; paragraphs [0012], [0025], [0066]<br>& EP 2221287 A1 | 1-15 |

| ☐ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04 November, 2010 (04.11.10) | Date of mailing of the international search report<br>16 November, 2010 (16.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

| **INTERNATIONAL SEARCH REPORT** | International application No. |
|---|---|
| | PCT/JP2010/063798 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
   The invention in claim 1 does not have novelty and a special technical feature since the invention is described in the following documents 1, 2, and consequently, the invention in claim 1 does not comply with the equirement of unity.
   Document 1: JP 7-61862 A (Honda Motor Co., Ltd.), 07 March 1995 (07.03.1995), claim 1; table 2; paragraphs [0045], [0048] (Family: none)
   Document 2: JP 2-248362 A (Inax Corp.), 04 October 1990 (04.10.1990), claim 1; page 2, lower right column, lines 9 to 14; page 3, lower right column, line 1 to page 4, upper left column, line 1; pages 3 to 4, tables 1 to 2 (Family: none)                    (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2010/063798 |

Continuation of Box No.III of continuation of first sheet(2)

The inventions in claims as indicated below are relevant to main invention.
Claims 1 - 6

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005105704 A

**Non-patent literature cited in the description**

- *Journal of the European Ceramic society,* 2002, vol. 22, 1811-1822